# EUROPEAN PATENT SPECIFICATION

(11) **EP 3 905 085 B1**
(45) Date of publication and mention of the grant of the patent: **20.08.2025**
(21) Application number: 19903504.9
(22) Date of filing: 25.11.2019
(51) Int. Cl.: G06F 21/55, H04L 9/40

(54) **DATA ABNORMALITY DETECTION METHOD AND APPARATUS, AND TERMINAL DEVICE**
VERFAHREN UND VORRICHTUNG ZUR ERFASSUNG VON DATENANOMALIEN UND ENDGERÄT
PROCÉDÉ ET APPAREIL DE DÉTECTION D'ANOMALIE DE DONNÉES ET DISPOSITIF DE TERMINAL

(30) Priority: 26.12.2018 CN 201811599678
(43) Date of publication of application: 03.11.2021
(73) Proprietor: ZTE Corporation, Shenzhen, Guangdong 518057 (CN)
(72) Inventor: ZHAI, Xinhu, Shenzhen, Guangdong 518057 (CN); WANG, Yilin, Shenzhen, Guangdong 518057 (CN); TIAN, Tian, Shenzhen, Guangdong 518057 (CN)
(74) Representative: Boult Wade Tennant LLP
(86) International application number: PCT/CN2019/120713
(87) International publication number: WO 2020/134790

(56) References cited:
- CN-A- 105 554 007
- CN-A- 106 027 577
- CN-A- 107 153 584
- US-A1- 2008 301 090
- US-A1- 2016 267 190
- US-A1- 2018 181 871
- US-B1- 8 381 292
- GANG WANG ET AL: "You are How You Click: Clickstream Analysis for Sybil Detection", USENIX, USENIX, THE ADVANCED COMPUTING SYSTEMS ASSOCIATION, 28 September 2013 (2013-09-28), pages 1 - 16, XP061008617

## Description

### Field of the Invention

The present application relates to the technical field of network security, and in particular, to a data abnormality detection method, a data abnormality detection apparatus, and a terminal device.

### Background of the Invention

With the rapid development of Internet technology and applications, web applications have become mainstream applications used in people's life and work. Web applications have brought relatively great convenience to people, but at the same time they have also become the main targets of hackers.

There are mainly two common abnormality detection methods for web applications, both of which analyze web logs to obtain the access behavior of a user who visits a website. The first abnormality detection method performs detection, based on rules, by matching the access behavior of the user with the typical attack access, such as SQL (structured query language) injection, cross site scripting (XSS), and buffer overflow. The second abnormality detection method performs detection by matching the access behavior of the user who performs abnormal access with an established normal behavioral pattern.

However, by performing detection against known attack types, only partial attack behavior matching the known attack types can be found in the attack behavior, and it is difficult to perform overall analysis. Besides, detection methods against abnormal access behavior cannot detect features of a single URL in the access behavior of the user and require establishment of a normal behavior pattern base, the cost of which is relatively high, and the accuracy of abnormality detection is low.

You Are How You Click: Clickstream Analysis for Sybil Detection (GANG WANG ET AL, USENIX, THE ADVANCED COMPUTING AYSTEMS ASSOCIATION, 28 September 2013(2013-09-28), pages 1-16) describes building a practical system for detecting fake identities using server-side clickstream models. A detection approach is developed to group "similar user clikstreams into behavioral cluster,by partitioning a similarity graph that captures distances between clickstream sequences.

American patent application US2008301090A1 provides for the detection of abnormal user behavior for a query session of an electronic search engine. A query session is initiated upon receipt of a user search request that includes one or more search terms. The search engine, in accordance with known search technology, generates a search results page that includes various hyperlinks, including for example web content hyperlinks, page navigation hyperlinks and advertising hyperlinks. Tracking user activities generates the clickstream associated with the search results page. The present invention determines a probability score for the clickstream and then this score is normalized. A comparison of the normalized probability score with other normalized probability scores for similar query sessions determines of the normalcy of the query session.

American patent application US8381292B discloses a system and method for enhancing spam avoidance efficiency and brand protection by automatically identifying a phishing website without human intervention. The system receives a stream of suspect Internet urls for potential phishing websites and uses a comparison strategy to determine whether the potential phishing website has already be labeled as a bonefid phishing website. A comparison system is utilized in which similarity data is calculated on various elements of the potential phishing website and then compared to similarity data of known phishing websites and known brands to determine whether the site needs human intervention. Various types of categorization structures and notification strategies are utilized in the system, including the adjustment of threshold comparison values in response to the identification of a potential phishing site displaying a brand of interest.

American patent application US2018181871A1 discloses a method of detecting an abnormal event based on statistics, the method including determining types of events occurring in event occurrence devices based on event information received from the event occurrence devices, grouping events in unverifiable types into at least one event group based on a similarity between the event, and detecting an abnormal event based on an occurring frequency of the event group or an occurring frequency of events corresponding to the same type.

### Summary of the Invention

The present invention is set out in the independent claims, with some optional features set out in the claims dependent thereto.

An embodiment of the present application provides a data abnormality detection method. The method includes: acquiring target data of a user accessing a target server; determining, according to the target data, first resource sequence information accessed by the user; acquiring first click events included in the first resource sequence information, and classifying each of the first click events to obtain an event type to which each of the first click events belongs; determining, according to a Markov chain constructed by event types obtained and a pre-trained Markov transition matrix, a first transition probability between every two adjacent states in the Markov chain; and determining, on the basis of the first transition probability between every two adjacent states in the Markov chain, whether access to the target server is abnormal.

An embodiment of the present application further provides a data abnormality detection apparatus. The apparatus includes: a first acquiring module configured for acquiring target data of a user accessing a target server; a first determining module configured for determining, according to the target data, first resource sequence information accessed by the user; a first classifying module configured for acquiring first click events included in the first resource sequence information and classifying each of the first click events to obtain an event type to which each of the first click events belongs; a probability determining module configured for determining, according to a Markov chain constructed by event types obtained and a pre-trained Markov transition matrix, a first transition probability between every two adjacent states in the Markov chain; and an abnormality detecting module configured for determining, on the basis of the first transition probability between every two adjacent states in the Markov chain, whether access to the target server is abnormal.

An embodiment of the present application further provides a terminal device. The terminal device includes a processor, a memory, and a computer program which is stored on the memory and capable of running on the processor. The computer program, when executed by the processor, implements steps of the data abnormality detection method provided in the above embodiment.

An embodiment of the present application further provides a computer readable storage medium. The computer readable storage medium stores a computer program thereon, and the computer program, when executed by a processor, implements steps of the data abnormality detection method provided in the above embodiment.

An embodiment of the present application further provides a computer program product. The computer program product includes a computer program stored on a non-transitory computer readable storage medium. The computer program includes program instructions which, when executed by a processor, enable the computer to implement the method described from various aspects.

### Brief Description of the Drawings

The accompanying drawings illustrated herein are used for providing better understanding of the present application, and constitute a part of the present application. Exemplary embodiments of the present application and the descriptions are used for explaining the present application, and do not constitute improper limitations on the present application. In the accompanying drawings:
Fig. 1 schematically shows a flowchart of a data abnormality detection method according to an embodiment in the present application;
Fig. 2 is a schematic diagram of constructing a Markov chain in the present application;
Fig. 3 schematically shows a flowchart of a data abnormality detection method according to another embodiment in the present application;
Fig. 4 schematically shows a structure of a data abnormality detection apparatus according to an embodiment in the present application; and
Fig. 5 schematically shows a structure of a terminal device in the present application.

### Detailed Description of the Embodiments

In order to make objectives, technical solutions, and advantages of the present application clearer, technical solutions of the present application are described clearly and completely in conjunction with specific embodiments of the present application and corresponding drawings. Obviously, the embodiments described are only part of embodiments of the present application, rather than all of the embodiments. All other embodiments obtained based on embodiments in the present application by a person of ordinary skill in the art without making any creative effort fall into the protection scope of the present application.

Technical solutions provided in various embodiments of the present application are described in detail with reference to accompanying drawings.

### Embodiment One

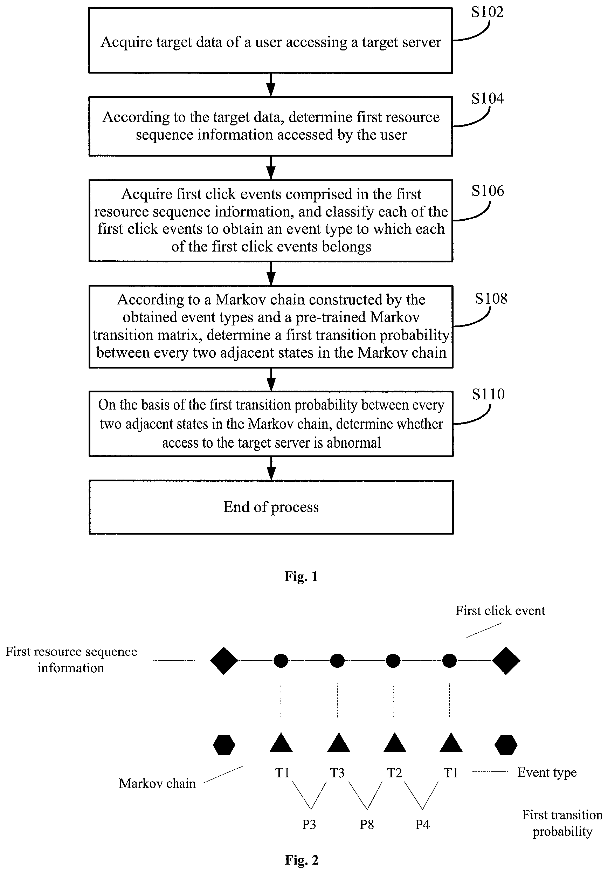

As shown in Fig. 1, the present embodiment provides a data abnormality detection method. The method may be carried out by a terminal device. The terminal device may be a device such as a personal computer, and may also be a mobile terminal device such as a mobile phone and a tablet computer. The terminal device may be a terminal device used by a user. The method may specifically include the following steps.

At step S102, target data of a user accessing a target server is acquired.

The target server may be a stand-alone server, and may also be a server cluster formed by multiple servers. The target server may be a background server of a certain website (such as an online shopping website or a search website). The target data may be traffic data generated when the user accesses the target server, and may include a timestamp, a source IP address, a destination IP address, and a domain name when the user performs accessing, a uniform resource identifier (URI) for the access of the user, and so on.

During implementation, with the rapid development of Internet technology and applications, web applications have become mainstream applications used in people's life and work, and have become standard application interaction interfaces. Web applications have brought great convenience to people, but at the same time they have also become the main targets of hackers. There are mainly two common abnormality detection methods for web applications, both of which analyze web logs to obtain the access behavior of a user who visits a website. The first abnormality detection method performs detection, based on rules, by matching the access behavior of the user with the typical attack access, such as SQL (structured query language) injection, cross site scripting (XSS), and buffer overflow. The second abnormality detection method performs detection by matching the access behavior of the user who performs abnormal access, such as maliciously crawling website information, maliciously scanning website vulnerabilities, and application layer DDOS attacks, with an established normal behavioral pattern. The above two methods are relatively common, and may be realized easily.

However, by performing detection against known attack types, it is difficult to perform overall analysis on attack behavior of an attacker. Besides, detection methods against abnormal access behavior cannot detect features of a single URL in the access behavior of the user and require establishment of a normal behavior pattern base, the cost of which is relatively high. In view of this, the present embodiment provides a technical solution to solve the above problem. Herein, the target data may be data generated when the user accesses a target server, and may include a timestamp when the user accesses the target server, records of the user accessing multiple URIs under the target server, a source IP address, a destination IP address, a domain name when the user performs accessing, and so on. The domain name may be used for distinguishing different target servers. Data of servers with the same domain name may be classified into one type, and analysis may be performed on data of target servers which belong to different types. The source IP address may be used for distinguishing different users.

When the user accesses the target server, multiple pieces of target data may be generated. The target data of the target server may be acquired via a mirror port by means of a port mirroring function of a routing-forwarding device (such as a switch or a router).

At step S104, according to the target data, first resource sequence information accessed by the user is determined.

The first resource sequence information may be information of a session sequence including one or more URIs.

During implementation, after acquiring the target data, a URI sequence included in the target data may be extracted. For example, the target data may include multiple pieces of attribute data, for example, a source IP, a target IP, a domain name, a timestamp, a URI and so on when the user performs accessing. Target data with the same domain name (i.e., the target data belongs to the same target server) may be extracted, and then URIs included in the target data may be extracted. For example, when the user accesses a server of the website Taobao, the user may log in at the home page of the website Taobao, enter the women's wear channel, and then enter a women's wear shop. In the above process, three URIs may be generated, i.e., a URI of the home page of the website Taobao (which may be marked as URI1), a URI of the home page of the women's wear channel (which may be marked as URI2), and a URI of the women's wear shop (which may be marked as URI3). These three URIs and corresponding accessing timestamps may be combined to form first resource sequence information of the user accessing the target server.

Besides, when the user accesses the target server, the first resource sequence information may be classified according to the time when the user accesses a URI. For example, multiple URIs may be classified into different first resource sequences according to a preset time threshold. For example, the preset time threshold is 30 minutes. That is, if a time interval between two adjacent URIs is less than 30 minutes, the two URIs are classified into the same resource sequence; and if the time interval between the two adjacent URIs is longer than 30 minutes, the two URIs are classified into different resource sequences. For example, the user accesses the homepage of the website Baidu at 11:01, views domestic news on the website Baidu at 11:02, then views the weather situation at 12:00, subsequently views relevant finance and economics information at 12:01, and finally closes this page. During this accessing process, a series of URIs, each of which has a timestamp, are generated. According to timestamps of the URIs and the preset time threshold (i.e., 30 minutes), target data generated in the above accessing process may be classified into two pieces of first resource sequence information. That is, a first one of the two pieces of first resource sequence information includes the URI of the homepage of Baidu, the URI of the page of the domestic news, and a second one of the two pieces of first resource sequence information includes the URI of the page of the weather situation and the URI of the page of the relevant finance and economics information.

At step S106, first click events included in the first resource sequence information are acquired, and each of the first click events is classified to obtain an event type to which each of the first click events belongs.

The first click event may be any click event performed by the user when accessing the target server.

During implementation, when the user accesses the target server, one or more click events may be generated. The click event includes a jumping click event and a closing click event, in which case the first click event is the jumping click event. The click event may include one or more URIs. For example, when the user accesses the website Baidu, the user clicks at the homepage of the website Baidu to view the weather situation, then clicks at the page of the weather situation to view the relevant finance and economics information, and clicks to close the page after entering the page of the finance and economics information. In this accessing process, three click events may be included. A first one of the three click events includes the URI of the homepage of the website Baidu and the URI of the page of the weather situation; a second one of the three click events includes the URI of the page of the weather situation and the URI of the page of the finance and economics information; and a third one of the three click events is closing the page, and only includes the URI of the page of the finance and economics information. The first one and the second one of the click events are first click events, while the third one of the click events is a closing click event.

Besides, URIs included in the first click events may be classified according to a click time of the user. For example, if three URIs are clicked successively within 5 seconds, the first click event includes three URIs. For example, as described above, when the user accesses the website Baidu, the user clicks at the homepage of the website Baidu to enter the page of weather situation and clicks at the page of weather situation to enter the page of the relevant finance and economics information within 5 seconds, and after staying at the page of the relevant finance and economics information for 1 minutes, the user clicks at the page of the relevant finance and economics information to enter the page of the map. In this case, the first resource sequence information includes two first click events. A first one of the two first click events includes three URIs (i.e., the URI of the homepage of the website Baidu, the URI of the page of the weather situation, and the URI of the page of the relevant finance and economics information), and a second one of the two first click events includes two URIs (i.e., the URI of the page of the relevant finance and economics information and the URI of the page of the map). Setting of the time threshold for classifying the URIs included in the first click events may be different according to actual application scenarios, and the present embodiment does not make limitations on this.

After acquiring the first click events, the first click events may be classified, so as to obtain an event type to which each of the click events belongs. For example, the click events may be classified according to correspondence between a time length between every two adjacent URI jumps and a preset time threshold, as shown in Table 1.

**Table 1**

| Time length between every two adjacent URI jumps | Event type |
|---|---|
| Less than 30 seconds | Event type 1 |
| Longer than or equal to 30 seconds and less than 1 minute | Event type 2 |
| Longer than 1 minute | Event type 3 |

**Table 2**

| URI clicked by the user | Click time |
|---|---|
| Homepage of Baidu | 11:01:01 |
| Weather situation | 11:01:03 |
| Finance and economics information | 11:04 |
| Close | 11:05 |

The user accessing the website Baidu is taken as an example according to Table 1. In the first one of the first click events, the user clicks at the homepage of the website Baidu to enter the page of the weather situation. It can be seen from Table 2 that a time length between two adjacent URI jumps in the first one of the first click events is 2 seconds, and thus the first one of the first click events belongs to the event type 1. Correspondingly, a time length between two adjacent URI jumps (from the page of the weather situation to the page of the finance and economics information) in the second one of the first click events is longer than 1 minute, and thus the second one of the first click events belongs to the event type 3. In a similar manner, after the first resource sequence information of the target data is acquired, all first click events may be classified according to timestamps of the first click events, so as to obtain an event type to which each of the first click events belongs. If the first click event includes multiple URIs, a total time length of multiple jumps is calculated, and then the event type to which the first click event belongs is determined according to the total time length.

In addition, the above embodiment provides an optional and realizable classifying method. There may be various specific classifying methods, and different classifying methods may be applied to different actual application scenarios. The present embodiment does not make limitations on this.

At step S108, according to a Markov chain constructed by event types obtained and a pre-trained Markov transition matrix, a first transition probability between every two adjacent states in the Markov chain is determined.

The pre-trained Markov matrix is a Markov transition matrix obtained by training according to any data of the target server.

During implementation, an event-type-based Markov matrix is constructed according to event types obtained. For example, as shown in Fig. 2, the target data includes four first click events. The four click events respectively belong to the event type 1 (T1), the event type 3 (T3), the event type 2 (T2), and the event type 1 (T1). That is, four states in the Markov chain obtained are respectively the event type 1, the event type 3, the event type 2, and the event type 1. According to the pre-trained Markov transition matrix shown in Table 3, a first transition probability between every two adjacent states in the Markov chain is determined.

**Table 3**

| Event type | | | |
|---|---|---|---|
| First transition probability (specific value) | T1 | T2 | T3 |
| Event type | | | |
| T1 | P1(0) | P2(0.2) | P3(0.3) |
| T2 | P4(0.5) | P5(0.1) | P6(0.6) |
| T3 | P7(0.3) | P8(0) | P9(0.9) |

As can be seen from Table 3, first transition probabilities included in the event-type-based Markov matrix corresponding to the first resource sequence information are respectively P3(T1-T3), P8(T3-T2), and P4(T2-T1).

At step S110, on the basis of the first transition probability between every two adjacent states in the Markov chain, it is determined whether access to the target server is abnormal.

During implementation, a total number of the first transition probabilities which is larger than or less than a preset threshold may be determined, and it is determined whether access to the target server is abnormal according to a determination result. For example, the access data of the user as described above is taken as an example. According to Table 3, it may be determined that P3 is 0.3, P8 being 0, P4 being 0.5. A preset determining rule may be that access to the target server is abnormal if the number of transition probabilities with the value 0 in the first transition probabilities is larger than 1. Since the number of first transition probabilities with the value 0 in the target data is not larger than 1, there is no abnormality in access to the target server.

In addition, there may be various methods for determining whether access to the target server is abnormal. The above embodiment provides an optional and realizable classifying method, and different determining methods may be selected according to different actual application scenarios. The present embodiment does not make limitations on this.

The present embodiment provides a data abnormality detection method. Herein, target data of a user accessing a target server is acquired; according to the target data, first resource sequence information accessed by the user is determined; then first click events included in the first resource sequence information are acquired, and each of the first click events is classified to obtain an event type to which each of the first click events belongs; thereafter, according to a Markov chain constructed by event types obtained and a pre-trained Markov transition matrix, a first transition probability between every two adjacent states in the Markov chain is determined; and accordingly, on the basis of the first transition probability between every two adjacent states in the Markov chain, it is determined whether access to the target server is abnormal. In this way, by detecting the event-type-based Markov chain constructed, it can be detected whether the access of the user to the target server is abnormal from an overall perspective, and by determining abnormality according to the first transition probability between every two adjacent states in the Markov chain, abnormality determining can be performed on each click event to the target server made by the user, so that the target data of accessing of the user can be detected from both the overall perspective and the partial perspective, thereby improving detection accuracy.

### Embodiment Two

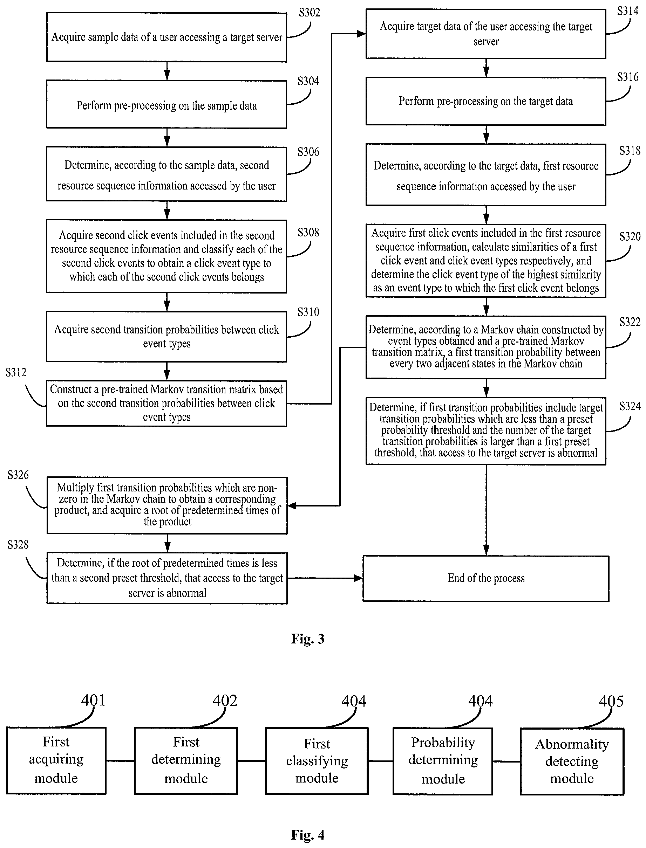

As shown in Fig. 3, the present embodiment provides a data abnormality detection method. The method may be carried out by a terminal device. The terminal device may be a device such as a personal computer, and may also be a mobile terminal device such as a mobile phone and a tablet computer. The terminal device may be a terminal device used by a user. The method may specifically include the following steps.

At step S302, sample data of a user accessing a target server is acquired.

The sample data may be traffic data generated when the user accesses the target server within a predetermined time, and may include a timestamp, a source IP address, a destination IP address, and a domain name when the user performs accessing, a uniform resource identifier (URI) for the access of the user, and so on. For example, the sample data may include traffic data of accessing the target server from January, 2018 to June, 2018.

For the specific processing process of the above step S302, reference may be made to relevant description in S102 in Embodiment One, and details are not repeated herein.

At step S304, pre-processing is performed on the sample data.

Pre-processing may include processing a predetermined parameter, filtering a predetermined noise page, detecting a domain name of the target server, and so on.

During implementation, after acquiring sample data, pre-processing may be performed on the sample data, such as processing a predetermined parameter, filtering a predetermined noise page, and detecting a domain name of the target server. Processing the predetermined parameter may be implemented by simplifying a URI in the sample data to remove predetermined parameters in the URI. For example, for a URI, i.e., http://xxx.com.cn/xxx/UI/index.aspx?_abcdef&&callback=123, which is included in the sample data, processing the predetermined parameter may be implemented by deleting predetermined parameters included in the URI, such as http, com, and cn. After processing is performed on the URI, a simplified URI is obtained, i.e., /xxx/ui/index.aspx. The predetermined parameters may be different according to actual application requirements, and the present embodiment does not make limitations on this. When the user accesses the target server, many noise pages may be generated, such as a log-in page and an auxiliary page. These pages appear accompanied by operations to assist in page displaying, information collecting, and so on. It may be determined whether a page is a noise page according to a characterization string carried by the page. For example, the URI of the log-in page has a string login (characterization strings carried by log-in pages may be different if target servers are different), and the auxiliary page may be a page whose URI ends in .axd, .ashx, .js, .jpghandler, .aspx, and so on (URI suffixes of auxiliary pages may be different if target servers are different). Noise pages in the sample data may be filtered according to the above characterization strings. Detecting the domain name may ensure that the sample data acquired are from the same target server.

At step S306, second resource sequence information accessed by the user is determined according to the sample data.

For the specific processing process of the above step S306, reference may be made to relevant description in S104 in Embodiment One, and details are not repeated herein.

At step S308, second click events included in the second resource sequence information are acquired, and each of the second click events is classified to obtain a click event type to which each of the second click events belongs.

For the specific processing process of the above step S308, reference may be made to relevant description in S106 in Embodiment One, and details are not repeated herein.

In actual application, there may be various processing manners for step S308, and another optional implementation is further provided below, processing details of which can be seen in the following step one to step three.

At step one, a URI included in each of the second click events is converted according to a conversion rule to obtain a conversion value.

During implementation, a URI included in each of the second click events may be converted according to a preset conversion rule. For example, English letters included in the URI may be converted into corresponding numbers, and a sum of all numbers is calculated. A sum value obtained is used as a conversion value. The above simplified URI (/xxx/ui/index.aspx) is taken as an example. In this case, numerical conversion is performed on the URI, and 24, 24, 24, 21, 7, 7, 14, 4, 5, 24, 1, 18, 16, and 24 are obtained, a sum value of which is 214. That is, the conversion value of the URI is 214.

Besides, each URI may be calculated by a hash function, and a corresponding hash value is used as the conversion value. Common hash functions include the division method, the midsquare method, the multiplication method, and so on. Conversion may be performed on the URI by selecting the specific hash function according actual application scenarios.

After converting the URI, the second click event may be converted into a set of multiple conversion values.

Apart from the above conversion rule provided, there may be various conversion methods. Different conversion methods may be applied to different actual application scenarios. The present embodiment does not make limitations on this.

At step two, similarity between every two second click events is calculated based on conversion values.

During implementation, after all URIs included in the second click event are converted into conversion values, similarity between every two second click events may be calculated according to the conversion values. For example, a first one of the second click events includes three URIs, and a corresponding set of conversion values is (20, 21, 22); and a second one of the second click events includes two URIs, and a corresponding set of conversion values is (21, 24). Similarity between the two second click events may be a ratio of the number of the same conversion values (there is one same conversion value, i.e., 21) to the number of different conversion values (there are three different conversion values, i.e., 20, 22, and 24), i.e., 1/3.

At step three, if the similarity is larger than a preset classification threshold, two second click events corresponding to the similarity are classified into one click event type, so as to determine a click event type to which each of the second click events belongs.

The number of click event types may be less than or equal to the number of URIs included in the second resource sequence information.

During implementation, if the similarity between two second click events is larger than a preset classification threshold, the two second click events may be classified into one click event type. Similarities of all second click events in the second resource sequence information included in the sample data are calculated, so as to classify each of the second click events into a corresponding click event type. After classification is completed, types of all click event types are labeled. For example, Table 4 shows sample data generated when the same user (with the same IP address) accesses a target server within a predetermined time period. The sample data includes three pieces of second resource sequence information, and each of the three pieces of second resource sequence information includes multiple second click events. URIs included in the second click events are converted, and Table 4 is obtained. Similarity of every two of click event 1 to click event 8 in Table 4 is calculated. A preset classification threshold of the similarity is 1/2. If the similarity between two second click events is larger than 1/2, the two second click events may be classified into one click event type. Click event types obtained after calculation are shown in Table 5.

**Table 4**

| | Second click event (URI conversion value) | Second click event (URI conversion value) | Second click event (URI conversion value) |
|---|---|---|---|
| Second resource sequence information 1 | Second click event 1 (1, 2, 3) | Second click event 2 (3, 2, 4) | Second click event 3 (4, 3) |
| Second resource sequence information 2 | Second click event 4 (1, 5) | Second click event 5 (5, 1, 7) | |
| Second resource sequence information 3 | Second click event 6 (1, 2, 9) | Second click event 7 (9, 7, 1, 4, 5) | Second click event 8 (5, 4, 2, 3) |

**Table 5**

| Click event type | Second click event included |
|---|---|
| Click event type 1 | Second click event 1, second click event 6 |
| Click event type 2 | Second click event 4, second click event 5, second click event 7 |
| Click event type 3 | Second click event 2, second click event 3, second click event 8 |

If the number of click event types obtained after calculation is larger than the number of URIs included in all second click events, it is considered that this classification fails. The preset classification threshold may be adjusted (to be a smaller value), until the number of click event types obtained after calculation is less than or equal to the number of URIs included in all second click events. For example, the above second click event 1 to second click event 8 include eight URIs altogether. The number of click event types obtained after calculation may not be larger than 8; and if the number of click event types obtained after calculation is larger than 8, it is required to adjust the preset classification threshold (1/2) to be a smaller value (such as 1/3).

At step S310, second transition probabilities between click event types are acquired.

During implementation, second transition probabilities between click event types may be acquired according to second click events included in each of the click event types. Transition probabilities of all second click events included in a first click event type to all second click events included in a second click event type may be calculated respectively, and then the transition probabilities of all click events included in the first click event type are averaged. For example, Table 5 shows click event types 1 to 3. Calculating a second transition probability from the click event type 1 to the click event type 2 is taken as an example. The click event type 1 includes the second click event 1 and the second click event 6, and the click event type 2 includes the second click event 5 and the second click event 7. A transition probability (P1) from the second click event 1 to the second click event 7 and a transition probability (P2) from the second click event 1 to the second click event 5 may be calculated, and then a transition probability (P3) from the second click event 6 to the second click event 7 and a transition probability (P4) from the second click event 6 to the second click event 5 may be calculated. At last, an average probability P5 of P1 to P4 is calculated, and P5 is the second transition probability from the click event type 1 to the click event type 2.

Calculating a second transition probability from the second click event 4 to the second click event 8 is taken as an example. The second click event 4 may transit to the second click event 5 and the second click event 8, and thus the second transition probability from the second click event 4 to the second click event 8 is 1/2.

In addition, calculating the second transition probability may not be limited to the calculation method provided in the above embodiment. The above method is an optional and realizable calculation method. The present embodiment does not make specific limitations on the method for calculating the second transition probability, and different calculation methods may be applied to different actual application scenarios.

At step S312, a Markov transition matrix is constructed based on the second transition probabilities between click event types.

During implementation, as shown in Table 6, a Markov transition matrix may be constructed based on the second transition probabilities between click event types.

**Table 6**

| Click event type | | | |
|---|---|---|---|
| Second transition probability | Click event type 1 | Click event type 2 | Click event type 3 |
| Click event type | | | |
| Click event type 1 | P11 | P12 | P13 |
| Click event type 2 | P21 | P22 | P23 |
| Click event type 3 | P31 | P23 | P33 |

P12 may be the second transition probability from the click event type 1 to the click event type 2.

At step S314, target data of the user accessing the target server is acquired.

For the specific processing process in the above step S314, reference may be referred to relevant description in S102 in Embodiment One, and details are not repeated herein.

At step S316, pre-processing is performed on the target data. The pre-processing includes processing a predetermined parameter, filtering a predetermined noise page, and detecting a domain name of the target server.

For the specific processing process in the above step S316, reference may be referred to relevant description in S304 in the above embodiment, and details are not repeated herein.

At step S318, according to the target data, first resource sequence information accessed by the user is determined.

For the specific processing process in the above step S318, reference may be referred to relevant description in S104 in Embodiment One, and details are not repeated herein.

At step S320, first click events included in the first resource sequence information are acquired, and similarities of a first click event and click event types are calculated respectively, a click event type with the highest similarity being determined as an event type to which the first click event belongs.

During implementation, URIs included in each of the first click events may be converted according to a conversion rule to obtain a conversion value, and then similarity of a first click event and a click event type is calculated. For example, comparisons may be made for the first click event and click events included in a click event type one by one, and multiple similarities obtained may be averaged, an average value being used as a similarity of the first click event and the click event type; and then a click event type with the highest similarity is determined as an event type to which the first click event belongs. For example, after a first click event is converted, a set of conversion values obtained may be (1, 8, 7), and click event types may be as shown in Table 5; and similarities of the first click event and three click event types in Table 5 may be calculated respectively, and results may be as shown in Table 7.

**Table 7**

| Click event type | Click events included | Similarities | Average value of similarities |
|---|---|---|---|
| Click event type 1 | Second click event 1 (1, 2, 3) | 1/3 | 7/24 |
| | Second click event 6 (1, 2, 9) | 1/4 | |
| Click event type 2 | Second click event 4 (1, 5) | 1/3 | 11/12 |
| | Second click event 5 (5, 1, 7) | 1 | |
| | Second click event 7 (9, 7, 1, 4, 5) | 1/2 | |
| Click event type 3 | Second click event 2 (3, 2, 4) | 0 | 0 |
| | Second click event 3 (4, 3) | 0 | |
| | Second click event 8 (5, 4, 2, 3) | 0 | |

As can be seen from Table 7, the first click event has the highest similarity with the click event type 2, and thus the first click event belongs to the click event type 2.

In actual application, there may be various processing manners for the above step S310, and another optional processing manner is further described below. For details, reference may be made to the following step one and step two.

At step one, a representative click event in each of the click event types is determined.

The representative click event may be a click event which has the highest similarity with other click events in the same click event type in each click event type.

The click event 2 in Table 5 is taken as an example. A similarity of the second click event 4 and the second click event 5 may be calculated; a similarity of the second click event 4 and the second click event 7 may be calculated; and then two similarities are averaged, and a value obtained is a similarity of the second click event 4 with other click events in the same type. In a similar way, a similarity of the second click event 5 with other click events in the same type and a similarity of the second click event 7 with other click events in the same type may be obtained. Similarities of the three second click events are compared, and thereby a second click event with the highest similarity (for example, the second click event 4) is used as the representative click event of the click event type 2.

At step two, similarities of the first click event and representative click events in respective click event types are calculated respectively.

During implementation, after representative click events in respective click event types are obtained by calculating, similarities of the first click event and representative click events in respective click event types may be calculated respectively, and a click event type to which a representative click event with the highest similarity belongs is used as the event type to which the first click event belongs.

At step S322, according to a Markov chain constructed by event types obtained and a pre-trained Markov transition matrix, a first transition probability between every two adjacent states in the Markov chain is determined.

For the specific processing process of the above step S322, reference may be made to relevant description in S108 in Embodiment One, and details are not repeated herein.

At step S324, if first transition probabilities include target transition probabilities which are less than a preset probability threshold and the number of the target transition probabilities is larger than a first preset threshold, access to the target server is abnormal.

During implementation, it is supposed that a preset probability threshold is 0.1 and a first preset threshold is 3. If the number of target transition probabilities which are less than 0.1 included in the first transition probabilities is 4, access to the target server is abnormal.

Alternatively, determination of abnormality detection may be performed according to first transition probabilities which are non-zero in the Markov chain, as shown in steps S326 to S328.

At step S326, first transition probabilities which are non-zero in the Markov chain are multiplied to obtain a corresponding product, and a root of a predetermined order of the product is acquired.

During implementation, it is supposed that a result of multiplication of first transition probabilities which are non-zero in the Markov chain is 0.64. A square root of this product is calculated, and a value obtained is 0.8.

At step S328, if the root of the predetermined order is less than a second preset threshold, access to the target server is abnormal.

During implementation, it is supposed that a second preset threshold is 0.9 and that the square root obtained is 0.8, and thus access to the target server is abnormal.

The present embodiment provides a data abnormality detection method. Herein, target data of a user accessing a target server is acquired; according to the target data, first resource sequence information accessed by the user is determined; then first click events included in the first resource sequence information are acquired, and each of the first click events is classified to obtain an event type to which each of the first click events belongs; thereafter, according to a Markov chain constructed by event types obtained and a pre-trained Markov transition matrix, a first transition probability between every two adjacent states in the Markov chain is determined; and accordingly, on the basis of the first transition probability between every two adjacent states in the Markov chain, it is determined whether access to the target server is abnormal. In this way, by detecting the event-type-based Markov chain constructed, it can be detected whether the access of the user to the target server is abnormal from an overall perspective, and by determining abnormality according to the first transition probability between every two adjacent states in the Markov chain, abnormality determining can be performed on each click event to the target server made by the user, so that the target data of accessing of the user can be detected from both the overall perspective and the partial perspective, thereby improving detection accuracy.

### Embodiment Three

The above description relates to the data abnormality detection methods provided in embodiments of the present application. Based on the same idea, the present embodiment further provides a data abnormality detection apparatus, as shown in Fig. 4.

The data abnormality detection apparatus includes a first acquiring module 401, a first determining module 402, a first classifying module 403, a probability determining module 404, and an abnormality detecting module 405. The first acquiring module 401 is configured for acquiring target data of a user accessing a target server; the first determining module 402 is configured for determining, according to the target data, first resource sequence information accessed by the user; the first classifying module 403 is configured for acquiring first click events included in the first resource sequence information and classifying each of the first click events to obtain an event type to which each of the first click events belongs; the probability determining module 404 is configured for determining, according to a Markov chain constructed by event types obtained and a pre-trained Markov transition matrix, a first transition probability between every two adjacent states in the Markov chain; and the abnormality detecting module 405 is configured for determining, on the basis of the first transition probability between every two adjacent states in the Markov chain, whether access to the target server is abnormal.

In the present embodiment, the apparatus further includes: a second acquiring module configured for acquiring sample data of the user accessing the target server; a second determining module configured for determining, according to the sample data, second resource sequence information accessed by the user; a second classifying module configured for acquiring second click events included in the second resource sequence information and classifying each of the second click events to obtain a click event type to which each of the second click events belongs; a probability acquiring module configured for acquiring second transition probabilities between click event types; and a matrix constructing module configured for constructing the pre-trained Markov transition matrix based on the second transition probabilities between the click event types. In the present embodiment, the second click event includes one or more URIs, and the second classifying module includes: a converting unit configured for converting, according to a preset conversion rule, a URI included in each of the second click events to obtain a conversion value; a calculating unit configured for calculating a similarity between every two second click events based on conversion values; and a first classifying unit configured for classifying, if the similarity is larger than a preset classification threshold, two click events corresponding to the similarity into one click event type, so as to determine a click event type to which each of the second click events belongs.

In the present embodiment, the first classifying module 403 includes: a second classifying unit configured for calculating similarities of a first click event and click event types respectively and determining the click event type with the highest similarity as an event type to which the first click event belongs.

In the present embodiment, the second classifying unit is configured for determining a representative click event in each of the click event types; and calculating similarities of the first click event and representative click events in respective click event types respectively.

In the present embodiment, the abnormality detecting module 405 includes a first determining unit configured for determining, if first transition probabilities include target transition probabilities which are less than a preset probability threshold and the number of the target transition probabilities is larger than a first preset threshold, that access to the target server is abnormal.

In the present embodiment, the abnormality detecting module 405 includes an acquiring unit configured for multiplying first transition probabilities which are non-zero in the Markov chain to obtain a corresponding product and acquiring a root of a predetermined order of the product; and a second determining unit configured for determining, if the root of the predetermined order is less than a second preset threshold, that access to the target server is abnormal.

In the present embodiment, the apparatus further includes a pre-processing module configured for performing pre-processing on the target data and the sample data. The pre-processing includes processing a predetermined parameter, filtering a predetermined noise page, and detecting a domain name of the target server.

The present embodiment provides a data abnormality detection apparatus. Herein, target data of a user accessing a target server is acquired; according to the target data, first resource sequence information accessed by the user is determined; then first click events included in the first resource sequence information are acquired, and each of the first click events is classified to obtain an event type to which each of the first click events belongs; thereafter, according to a Markov chain constructed by event types obtained and a pre-trained Markov transition matrix, a first transition probability between every two adjacent states in the Markov chain is determined; and accordingly, on the basis of the first transition probability between every two adjacent states in the Markov chain, it is determined whether access to the target server is abnormal. In this way, by detecting the event-type-based Markov chain constructed, it can be detected whether the access of the user to the target server is abnormal from an overall perspective, and by determining abnormality according to the first transition probability between every two adjacent states in the Markov chain, abnormality determining can be performed on each click event to the target server made by the user, so that the target data of accessing of the user can be detected from both the overall perspective and the partial perspective, thereby improving detection accuracy.

### Embodiment Four

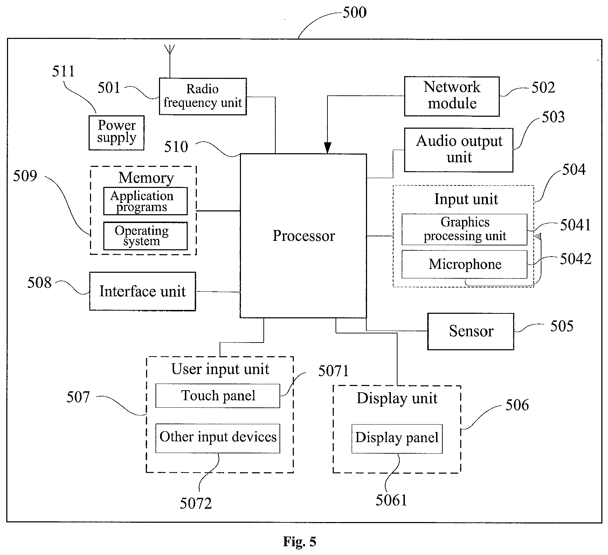

Fig. 5 schematically shows a hardware structure of a mobile terminal for implementing respective embodiments in the present application. A mobile terminal 500 includes, but is not limited to, components such as a radio frequency unit 501, a network module 502, an audio output unit 503, an input unit 504, a sensor 505, a display unit 506, a user input unit 507, an interface unit 508, a memory 509, a processor 510, and a power supply 511. A person skilled in the art may understand that, the structure of the mobile terminal shown in Fig. 5 does not constitute a limitation on the mobile terminal, and the mobile terminal may include more or less components than those shown, may combine with some components, or may use a different arrangement of the components. In the present embodiment, the mobile terminal includes, but is not limited to, a mobile phone, a tablet computer, a laptop, a palmtop, a vehicle-mounted terminal, a wearable device, a pedometer, etc.

The processor 510 is configured for acquiring target data of a user accessing a target server; the processor 510 is further configured for determining, according to the target data, first resource sequence information accessed by the user; the processor 510 is further configured for acquiring first click events included in the first resource sequence information and classifying each of the first click events to obtain an event type to which each of the first click events belongs; additionally, the processor 510 is further configured for determining, according to a Markov chain constructed by event types obtained and a pre-trained Markov transition matrix, a first transition probability between every two adjacent states in the Markov chain; and in addition, the processor 510 is further configured for determining, on the basis of the first transition probability between every two adjacent states in the Markov chain, whether access to the target server is abnormal.

Furthermore, the processor 510 is further configured for acquiring sample data of a user accessing a target server; the processor 510 is further configured for determining, according to the sample data, second resource sequence information accessed by the user; the processor 510 is further configured for acquiring second click events included in the second resource sequence information and classifying each of the second click events to obtain a click event type to which each of the second click events belongs; the processor 510 is further configured for acquiring second transition probabilities between click event types; the processor 510 is further configured for constructing the pre-trained Markov transition matrix based on the second transition probabilities between the click event types; the processor 510 is further configured for converting, according to a preset conversion rule, a URI included in each of the second click events to obtain a conversion value; the processor 510 is further configured for calculating a similarity between every two second click events based on conversion values; and the processor 510 is further configured for classifying, if the similarity is larger than a preset classification threshold, two click events corresponding to the similarity into one click event type, so as to determine a click event type to which each of the second click events belongs.

Furthermore, the processor 510 is further configured for calculating similarities of a first click event and click event types respectively and determining the click event type with the highest similarity as an event type to which the first click event belongs.

Furthermore, the processor 510 is further configured for determining a representative click event in each of the click event types; and the processor 510 is further configured for calculating similarities of the first click event and representative click events in respective click event types respectively.

Furthermore, the processor 510 is further configured for determining, if first transition probabilities include target transition probabilities which are less than a preset probability threshold and the number of the target transition probabilities is larger than a first preset threshold, that access to the target server is abnormal.

Furthermore, the processor 510 is further configured for multiplying first transition probabilities which are non-zero in the Markov chain to obtain a corresponding product and acquiring a root of a predetermined order of the product; and the processor 510 is further configured for determining, if the root of the predetermined order is less than a second preset threshold, that access to the target server is abnormal.

Furthermore, pre-processing is performed on the target data and the sample data. The pre-processing includes processing a predetermined parameter, filtering a predetermined noise page, and detecting a domain name of the target server.

The present embodiment provides a terminal device. Herein, target data of a user accessing a target server is acquired; according to the target data, first resource sequence information accessed by the user is determined; then first click events included in the first resource sequence information are acquired, and each of the first click events is classified to obtain an event type to which each of the first click events belongs; thereafter, according to a Markov chain constructed by event types obtained and a pre-trained Markov transition matrix, a first transition probability between every two adjacent states in the Markov chain is determined; and accordingly, on the basis of the first transition probability between every two adjacent states in the Markov chain, it is determined whether access to the target server is abnormal. In this way, by detecting the event-type-based Markov chain constructed, it can be detected whether the access of the user to the target server is abnormal from an overall perspective, and by determining abnormality according to the first transition probability between every two adjacent states in the Markov chain, abnormality determining can be performed on each click event to the target server made by the user, so that the target data of accessing of the user can be detected from both the overall perspective and the partial perspective, thereby improving detection accuracy.

It should be understood that, in the present embodiment, the radio frequency unit 501 may be configured for receiving and transmitting information or receiving and transmitting signals during a call. Specifically, downlink data from a base station, after being received, is processed by the processor 510; and additionally, uplink data is transmitted to the base station. Generally, the radio frequency unit 501 includes, but is not limited to, an antenna, at least one amplifier, a transceiver, a coupler, a low noise amplifier, a duplexer, and so on. In addition, the radio frequency unit 501 may also communicate with other devices via a wireless communication system and a network.

The mobile terminal provides the user with wireless broadband internet access via the network module 502, for example, assisting the user in sending and receiving emails, browsing webpages, accessing stream media, and so on.

The audio output unit 503 may convert audio data received by the radio frequency unit 501 or the network module 502 or audio data stored in the memory 509 into audio signals and output the audio signals as sounds. Moreover, the audio output unit 503 may also provide audio output associated with specific functions implemented by the mobile terminal 500 (such as a calling signal receiving sound and a message receiving sound). The audio output unit 503 includes a speaker, a buzzer, a receiver, and so on.

The input unit 504 is configured for receiving audio or video signals. The input unit 504 may include a graphics processing unit (GPU) 5041 and a microphone 5042. The graphics processing unit 5041 processes image data of static pictures or of a video acquired by an image capturing device (such as a camera) in a video capturing mode or a picture capturing mode. Processed image frames may be displayed on the display unit 506. Image frames processed by the graphics processing unit 5041 may be stored on the memory 509 (or other storage mediums) or transmitted via the radio frequency unit 501 or the network module 502. The microphone 5042 may receive sounds, and can process such sounds into audio data. Processed audio data may be converted, in a phone communication mode, to have such a format that the processed audio data may be transmitted to a mobile communication base station via the radio frequency unit 501, and output.

The mobile terminal 500 further includes at least one sensor 505, for example, a light sensor, a motion sensor, and other sensors. Specifically, the light sensor includes an ambient light sensor and a proximity sensor. The ambient light sensor may adjust lightness of a display panel 5061 according to an intensity of the ambient light, and the proximity sensor may turn off the display panel 5061 and or the backlight when the mobile terminal 500 moves to the ear. As one kind of the motion sensor, an accelerometer sensor may detect a magnitude of an accelerated velocity at various directions (generally three axes), may detect a magnitude and a direction of the gravity, and may be configured for identifying a posture of the mobile terminal (for example, switching between a horizontal screen and a vertical screen, an associated game, magnetometer posture calibration) and functions associated with vibration identification (for example, pedometer and knocking), and so on. The sensor 505 may further include a fingerprint sensor, a pressure sensor, an iris sensor, a molecular sensor, a gyroscope, a barometer, a hygrometer, a thermometer, an infrared sensor, and so on, and details are not described herein.

The display unit 506 is configured for displaying information input by the user or information provided to the user. The display unit 506 may include the display panel 5061, and the display panel 5061 may be configured in a form such as a liquid crystal display (LCD) and an organic light-emitting diode (OLED).

The user input unit 507 is configured for receiving input numeral or character information and generating key signal input associated with user settings of the mobile terminal and functional control. Specifically, the user input unit 507 includes a touch panel 5071 and other input devices 5072. The touch panel 5071, also called a touch screen, may collect touch operations of the user on or near the touch panel 5071 (such as operations of the user using a finger or any suitable object or accessory such as a stylus on or near the touch panel 5071). The touch panel 5071 may include two parts, i.e., a touch detection device and a touch controller. The touch detection device detects a touch orientation of the user, detects a signal brought by the touch operation, and transmits the signal to the touch controller; and the touch controller receives touch information from the touch detection device, converts the touch information into touch-point coordinates, transmits the touch-point coordinates to the processor 510, and receives a command transmitted by the processor 510 and executes the command. In addition, the touch panel 5071 may be realized by various types, such as a resistive touch panel, a capacitive touch panel, an infrared touch panel, and a surface acoustic wave touch panel. In addition to the touch panel 5071, the user input unit 507 may further include other input devices 5072. Specifically, other input devices 5072 may include, but are not limited to, a physical keyboard, a function key (such as a volume control key and a switch key), a trackball, a mouse, and a joystick, and details are not described herein.

In an exemplary embodiment, the touch panel 5071 may cover on the display panel 5061. When the touch panel 5071 detects a touch operation on or near the touch panel 5071, the touch panel 5071 transmits the touch operation to the processor 510 to determine a type of a touch event. After that, the processor 510 provides corresponding visual output on the display panel 5061 according to the type of the touch event. Although the touch panel 5071 and the display panel 5061 are provided as two independent components to implement input and output functions of the mobile terminal in Fig. 5, in some embodiments, the touch panel 5071 and the display panel 5061 may be integrated to implement input and output functions of the mobile terminal. Limitations are not made herein.

The interface unit 508 is an interface for connecting an external device with the mobile terminal 500. For example, the external device may include, but is not limited to, a wired or wireless headset port, an external power supply (or battery charger) port, a wired or wireless data port, a memory card port, a port for connecting a device having an identification module, an audio input/output (I/O) port, a video I/O port, an earphone port, and so on. The interface unit 508 may be configured to receive input (such as data information and power) from the external device and transfer the received input to one or more elements within the mobile terminal 500, or may be configured to transfer data between the mobile terminal 500 and the external device.

The memory 509 may be configured to store software programs and various data. The memory 509 may mainly include a program storing area and a data storing area. The program storing area may store an operating system, an application program required for at least one function (such as a sound playing function and an image playing function), and so on. The data storing area may store data created according to use of the mobile phone (such as audio data and a phonebook), and so on. Besides, the memory 509 may include a high-speed random access memory, and may include a nonvolatile memory, for example, a magnetic disk storage device, a flash memory device, or other volatile solid-state memory devices.

The processor 510 is a control center of the mobile terminal, uses various interfaces and lines to connect various parts of the whole mobile terminal, and implements various functions of the mobile terminal and processes data by running or executing the software programs stored in the memory 509 and/or a module and invoking data stored in the memory 509, so as to perform overall monitoring on the mobile terminal. The processor 510 may include one or more processing unit. Preferably, an application processor and a modem processor may be integrated into the processor 510. The application processor mainly processes the operating system, the user interface, application programs, and so on. The modem processor mainly processes wireless communication. It may be understood that that the modem processor may not be integrated into the processor 510.

The mobile terminal 500 may also include the power supply 511 (such as a battery) for supplying power to various components. Preferably, the power supply 511 may be logically connected with the processor 510 via a power supply management system, so as to implement functions such as charging and discharging management and power dissipation management via the power supply management system.

Preferably, the present embodiment further provides a mobile terminal, which includes the processor 510, the memory 509, and a computer program that is stored on the memory 509 and capable of running on the processor 510. The computer program, when executed by the processor 510, implements various processes in the embodiments of the above data abnormality detection method, and the same technical effect can be achieved. To avoid repetition, details are not repeated herein.

### Embodiment Five

An embodiment of the present application further provides a computer readable storage medium. The computer readable storage medium stores a computer program thereon. The computer program, when executed by a processor, implements various processes in the embodiments of the above data abnormality detection method, and the same technical effect can be achieved. To avoid repetition, details are not repeated herein. Examples of the computer readable storage medium include a read-only memory (ROM), a random access memory (RAM), a diskette, or an optical disk, and so on.

The present embodiment provides a computer readable storage medium. Herein, target data of a user accessing a target server is acquired; according to the target data, first resource sequence information accessed by the user is determined; then first click events included in the first resource sequence information are acquired, and each of the first click events is classified to obtain an event type to which each of the first click events belongs; thereafter, according to a Markov chain constructed by event types obtained and a pre-trained Markov transition matrix, a first transition probability between every two adjacent states in the Markov chain is determined; and accordingly, on the basis of the first transition probability between every two adjacent states in the Markov chain, it is determined whether access to the target server is abnormal. In this way, by detecting the event-type-based Markov chain constructed, it can be detected whether the access of the user to the target server is abnormal from an overall perspective, and by determining abnormality according to the first transition probability between every two adjacent states in the Markov chain, abnormality determining can be performed on each click event to the target server made by the user, so that the target data of accessing of the user can be detected from both the overall perspective and the partial perspective, thereby improving detection accuracy.

It should be understood by a person skilled in the art that the present embodiment may be provided as a method, a system, or a computer program product. An embodiment of the present application may take the form of a hardware embodiment, a software embodiment, or an embodiment combining software and hardware aspects. Moreover, the present embodiment may take the form of a computer program product that can be implemented on one or more computer usable storage mediums (which include, but are not limited to, a disk memory, a CD-ROM, an optical memory, etc.) that include computer usable program codes.

The present application is described according to the flowchart and/or the block diagram of the method, apparatus (system), and the computer program product in embodiments of the present application. It should be understood that each process and/or block in the flowchart and/or the block diagram and a combination of the process and/or block in the flowchart and/or the block diagram may be implemented by a computer program instruction. These computer program instructions may be provided to a processor of a general-purpose computer, a specialized computer, an embedded processor, or other programmable data equipment so as to generate a machine, so that the instructions executed through the processor of the computer or other programmable data equipment generate a device that is used to realize functions specified in one or more processes in the flowchart and/or one or more blocks in the block diagram.

These computer program instructions may also be stored in a computer-readable memory that can direct the computer or other programmable data processing equipment to work in a specific manner, so that the instructions stored in the computer-readable memory produce an article of manufacture including an instruction device. The instruction device implements functions specified in one or more processes in the flowchart and/or one or more blocks in the block diagram.

These computer program instructions may also be loaded on the computer or other programmable data processing equipment, so that a series of operation steps are executed on the computer or other programmable equipment to produce computer-implemented processing. In this way, instructions executed on the computer or other programmable equipment provide steps for implementing functions specified in one or more processes in the flowchart and/or one or more blocks in the block diagram.

In a typical configuration, a computing device includes one or more processors (CPUs), an input/output interface, a network interface, and a memory.

The memory may be in the form of a non-permanent memory, a random access memory (RAM), and/or a non-volatile memory among computer-readable mediums. For example, the memory may be a read-only memory (ROM) or a flash memory (flash RAM). The memory is an example of the computer readable mediums.

The computer-readable mediums include permanent and non-permanent, removable and non-removable mediums, and information storage may be realized by any method or technology. The information may be a computer-readable instruction, a data structure, a program module, or other data. Examples of computer storage mediums include, but are not limited to, a phase change memory (PRAM), a static random access memory (SRAM), a dynamic random access memory (DRAM), and other types of random access memory (RAM), read-only memory (ROM), electrically erasable programmable read-only memory (EEPROM), flash memory or other memory technologies, a compact disc read-only memory (CD-ROM), a digital versatile disc (DVD) or other optical storage, a magnetic cassette, a magnetic tape, a magnetic disk storage or other magnetic storage devices or any other non-transmission mediums, and the computer storage mediums may be used to store information that can be accessed by the computing device. According to the definition herein, the computer-readable mediums do not include transitory media, such as modulated data signals and carrier waves.

The terms "include", "including", or any other variation thereof, are intended to cover a non-exclusive inclusion, such that a process, a method, an article, or an apparatus that includes a series of elements not only includes those elements but also may include other elements not expressly listed or inherent to such process, method, article, or apparatus. An element preceded by "includes a ..." does not, without more constraints, preclude the existence of additional identical elements in the process, method, article, or apparatus that includes the element.

### Embodiment Six

An embodiment of the present application further provides a computer program product. The computer program product includes a computer program stored on a non-transitory computer readable storage medium. The computer program includes program instructions which, when executed by a processor, enable the computer to implement the method described in any of the above method embodiments.

It should be understood by a person skilled in the art that the present embodiment may be provided as a method, a system, or a computer program product. An embodiment of the present application may take the form of a hardware embodiment, a software embodiment, or an embodiment combining software and hardware aspects. Moreover, the present embodiment may take the form of a computer program product that can be implemented on one or more computer usable storage mediums (which include, but are not limited to, a disk memory, a CD-ROM, an optical memory, etc.) that include computer usable program codes.

The above descriptions are only embodiments of the present application, and are not intended to limit the present application. For a person skilled in the art, various modifications and changes may be made to the present application. Any modification, equivalent replacement, improvement, etc. made within the principle of the present application shall be included in the scope of the claims of the present application.

## Claims

1. A data abnormality detection method, comprising:
acquiring target data of a user accessing a target server;
determining, according to the target data, first resource sequence information accessed by the user;
acquiring first click events comprised in the first resource sequence information, and classifying each of the first click events to obtain an event type to which each of the first click events belongs;
determining, according to a Markov chain constructed by the event types obtained and a pre-trained Markov transition matrix, a first transition probability between every two adjacent states in the Markov chain; and
determining, on the basis of the first transition probability between every two adjacent states in the Markov chain, whether access to the target server is abnormal,
wherein the classifying each of the first click events to obtain an event type to which each of the first click events belongs further comprises: calculating similarities of a first click event and click event types respectively, and determining the click event type with the highest similarity as an event type to which the first click event belongs,
**characterized in that**:
the calculating the similarities of the first click event and the click event types respectively further comprises: determining a representative click event in each of the click event types; and calculating similarities of the first click event and representative click events in respective click event types respectively.

2. The method according to claim 1, wherein before acquiring the target data of the user accessing the target server, the method further comprises:
acquiring sample data of the user accessing the target server;
determining, according to the sample data, second resource sequence information accessed by the user;
acquiring second click events comprised in the second resource sequence information, and classifying each of the second click events to obtain the click event type to which each of the second click events belongs;
acquiring second transition probabilities between click event types; and
constructing the pre-trained Markov transition matrix based on the second transition probabilities between click event types.

3. The method according to claim 2, wherein the second click event comprises one or more URIs, and classifying each of the second click events to obtain a click event type to which each of the second click events belongs further comprises:
converting, according to a conversion rule, a URI comprised in each of the second click events to obtain a conversion value;
calculating a similarity between every two second click events based on conversion values; and
classifying, if the similarity is larger than a preset classification threshold, two click events corresponding to the similarity into one click event type, so as to determine a click event type to which each of the second click events belongs.

4. The method according to claim 1, wherein determining whether the access to the target server is abnormal on the basis of the first transition probability between every two adjacent states in the Markov chain further comprises:
determining, if first transition probabilities comprise target transition probabilities which are less than a preset probability threshold and the number of the target transition probabilities is larger than a first preset threshold, that the access to the target server is abnormal.

5. The method according to claim 1, wherein determining whether the access to the target server is abnormal on the basis of the first transition probability between every two adjacent states in the Markov chain further comprises:
multiplying first transition probabilities which are non-zero in the Markov chain to obtain a corresponding product, and acquiring a root of a predetermined order of the product; and
determining, if the root of the predetermined order is less than a second preset threshold, that the access to the target server is abnormal.

6. The method according to claim 2, wherein the method further comprises:
performing pre-processing on the sample data and the sample data, wherein the pre-processing comprises processing a predetermined parameter, filtering a predetermined noise page, and detecting a domain name of the target server.

7. A data abnormality detection apparatus, comprising:
a first acquiring module (401) configured for acquiring target data of a user accessing a target server;
a first determining module (402) configured for determining, according to the target data, first resource sequence information accessed by the user;
a first classifying module (403) configured for acquiring first click events comprised in the first resource sequence information and classifying each of the first click events to obtain an event type to which each of the first click events belongs;
a probability determining module (404) configured for determining, according to a Markov chain constructed by the
event types obtained and a pre-trained Markov transition matrix, a first transition probability between every two adjacent states in the Markov chain; and
an abnormality detecting module (405) configured for determining, on the basis of the first transition probability between every two adjacent states in the Markov chain, whether access to the target server is abnormal,
wherein the first classifying module (403) further comprises: a second classifying unit configured for calculating similarities of a first click event and click event types respectively and determining the click event type with the highest similarity as an event type to which the first click event belongs, **characterized in that**:
the second classifying unit is further configured for: determining a representative click event in each of the click event types; and calculating similarities of the first click event and representative click events in respective click event types respectively.

8. The apparatus according to claim 7, wherein the apparatus further comprises:
a second acquiring module configured for acquiring sample data of the user accessing the target server;
a second determining module configured for determining, according to the sample data, second resource sequence information accessed by the user;
a second classifying module configured for acquiring second click events comprised in the second resource sequence information and classifying each of the second click events to obtain the click event type to which each of the second click events belongs;
a probability acquiring module configured for acquiring second transition probabilities between click event types; and
a matrix constructing module configured for constructing the pre-trained Markov transition matrix based on the second transition probabilities between the click event types.

9. The apparatus according to claim 8, wherein the second click event comprises one or more URIs, and the second classifying module further comprises:
a converting unit configured for converting, according to a preset conversion rule, a URI included in each of the second click events to obtain a conversion value;
a calculating unit configured for calculating a similarity between every two second click events based on conversion values; and
a first classifying unit configured for classifying, if the similarity is larger than a preset classification threshold, two click events corresponding to the similarity into one click event type, so as to determine a click event type to which each of the second click events belongs.

10. The apparatus according to claim 7, wherein the abnormality detecting module (405) further comprises:
a first determining unit configured for determining, if first transition probabilities comprise target transition probabilities which are less than a preset probability threshold and the number of the target transition probabilities is larger than a first preset threshold, that the access to the target server is abnormal;
an acquiring unit configured for multiplying first transition probabilities which are non-zero in the Markov chain to obtain a corresponding product and acquiring a root of a predetermined order of the product; and
a second determining unit configured for determining, if the root of the predetermined order is less than a second preset threshold, that the access to the target server is abnormal.

11. The apparatus according to claim 8, wherein the apparatus further comprises:
a pre-processing module configured for performing pre-processing on the target data and the sample data, wherein the pre-processing comprises processing a predetermined parameter, filtering a predetermined noise page, and detecting a domain name of the target server.

12. A terminal device, comprising: a processor, a memory, and a computer program which is stored on the memory and capable of running on the processor, **characterized in that**: the computer program, when executed by the processor, implements steps of the data abnormality detection method according to any one of claims 1-6.

## Patentansprüche

1. Verfahren zum Erkennen von Datenanomalien, mit den Schritten:
Erfassen von Zieldaten eines Benutzers, der auf einen Zielserver zugreift;
Bestimmen von erster Ressourcensequenzinformation, die der Benutzer abgefragt hat, anhand der Zieldaten;
Erfassen von in der ersten Ressourcensequenzinformation enthaltenen ersten Klickereignissen und Klassifizieren jedes der ersten Klickereignisse, um einen Ereignistyp zu erhalten, zu dem jedes der ersten Klickereignisse gehört;
Bestimmen, anhand einer durch die erhaltenen Ereignistypen und eine vorab trainierte Markov-Übergangsmatrix konstruierten Markov-Kette, einer ersten Übergangswahrscheinlichkeit zwischen allen Paaren von benachbarten Zuständen in der Markov-Kette; und
Bestimmen, ob der Zugriff auf den Zielserver anomal ist, auf der Grundlage der ersten Übergangswahrscheinlichkeit zwischen allen Paaren von benachbarten Zustände in der Markov-Kette,
wobei das Klassifizieren jedes der ersten Klickereignisse, um einen Ereignistyp zu erhalten, zu dem jedes der ersten Klickereignisse gehört, ferner umfasst: Berechnen von Ähnlichkeiten zwischen einem ersten Klickereignis und Klickereignistypen und Bestimmen des Klickereignistyps mit der höchsten Ähnlichkeit als den Ereignistyp, zu dem das erste Klickereignis gehört,
**dadurch gekennzeichnet, dass**
das Berechnen der Ähnlichkeiten zwischen dem ersten Klickereignis und den Klickereignistypen ferner umfasst:
Bestimmen eines repräsentativen Klickereignisses zu jedem der Klickereignistypen; und Berechnen von Ähnlichkeiten zwischen dem ersten Klickereignis und repräsentativen Klickereignissen der jeweiligen Klickereignistypen.

2. Verfahren nach Anspruch 1, wobei das Verfahren vor dem Erfassen der Zieldaten des auf den Zielserver zugreifenden Benutzers ferner umfasst:
Erfassen von Stichprobendaten des auf den Zielserver zugreifenden Benutzers;
Bestimmen von vom Benutzer abgefragter zweiter Ressourcensequenzinformation anhand der Stichprobendaten;
Erfassen von in den zweiten Ressourcensequenzinformationen enthaltenen zweiten Klickereignissen und Klassifizieren jedes der zweiten Klickereignisse, um den Klickereignistyp zu erhalten, zu dem jedes der zweiten Klickereignisse gehört;
Erfassen von zweiten Übergangswahrscheinlichkeiten zwischen Klickereignistypen; und
Konstruieren der vortrainierten Markov-Übergangsmatrix auf der Grundlage der zweiten Übergangswahrscheinlichkeiten zwischen Klickereignistypen.

3. Verfahren nach Anspruch 2, bei dem das zweite Klickereignis eine oder mehrere URIs umfasst, und das Klassifizieren jedes der zweiten Klickereignisse, um einen Klickereignistyp zu erhalten, zu dem jedes der zweiten Klickereignisse gehört, ferner umfasst:
Umwandeln eines in jedem der zweiten Klickereignisse enthaltenen URI anhand einer Umwandlungsregel, um einen Umwandlungswert zu erhalten;
Berechnen einer Ähnlichkeit zwischen jeweils zwei zweiten Klickereignissen auf der Grundlage von Umwandlungswerten; und
wenn die Ähnlichkeit größer als ein voreingestellter Klassifizierungsschwellenwert ist, Klassifizieren von zwei Klickereignissen, die der Ähnlichkeit entsprechen, in einen einzigen Klickereignistyp, um einen Klickereignistyp zu bestimmen, zu dem jedes der zweiten Klickereignisse gehört.

4. Verfahren nach Anspruch 1, bei dem das Bestimmen, ob der Zugriff auf den Zielserver anomal ist, auf der Grundlage der ersten Übergangswahrscheinlichkeit zwischen jeweils zwei benachbarten Zuständen in der Markov-Kette ferner umfasst:
Bestimmen, dass der Zugriff auf den Zielserver anomal ist, wenn erste Übergangswahrscheinlichkeiten Zielübergangswahrscheinlichkeiten umfassen, die kleiner als ein voreingestellter Wahrscheinlichkeitsschwellenwert sind, und die Anzahl der Zielübergangswahrscheinlichkeiten größer als ein erster voreingestellter Schwellenwert ist.

5. Verfahren nach Anspruch 1, bei dem das Bestimmen, ob der Zugriff auf den Zielserver anomal ist, auf der Grundlage der ersten Übergangswahrscheinlichkeit zwischen jeweils zwei benachbarten Zuständen in der Markov-Kette ferner umfasst:
Multiplizieren von ersten, von Null verschiedenen Übergangswahrscheinlichkeiten in der Markov-Kette, um ein entsprechendes Produkt zu erhalten, und Ermitteln einer Wurzel vorgegebener Ordnung des Produkts; und
Feststellen, dass der Zugriff auf den Zielserver anomal ist, wenn die Wurzel vorgegebener Ordnung kleiner als ein zweiter voreingestellter Schwellenwert ist.

6. Verfahren nach Anspruch 2, wobei das Verfahren ferner umfasst:
Durchführen einer Vorverarbeitung der Stichprobendaten und der Stichprobendaten, wobei die Vorverarbeitung das Verarbeiten eines vorgegebenen Parameters, das Filtern einer vorgegebenen Rauschseite und das Erfassen eines Domänennamens des Zielservers umfasst.

7. Vorrichtung zum Erfassen von Datenanomalien, umfassend:
ein erstes Erfassungsmodul (401), das zum Erfassen von Zieldaten eines auf einen Zielserver zugreifenden Benutzers konfiguriert ist;
ein erstes Bestimmungsmodul (402), das zum Bestimmen von erster Ressourcensequenzinformation, auf die der Benutzer zugegriffen hat, anhand der Zieldaten konfiguriert ist;
ein erstes Klassifizierungsmodul (403), das zum Erfassen von in der ersten Ressourcensequenzinformation enthaltenen ersten Klickereignissen und zum Klassifizieren jedes der ersten Klickereignisse konfiguriert ist, um einen Ereignistyp zu erhalten, zu dem jedes der ersten Klickereignisse gehört;
ein Wahrscheinlichkeitsbestimmungsmodul (404), das konfiguriert ist zum Bestimmen, anhand einer durch die erhaltenen Ereignistypen und eine vorab trainierte Markov-Übergangsmatrix konstruierten Markov-Kette, einer ersten Übergangswahrscheinlichkeit zwischen jedem Paar von benachbarten Zuständen in der Markov-Kette; und
ein Anomalieerkennungsmodul (405), das konfiguriert ist zum Bestimmen, ob der Zugriff auf den Zielserver anomal ist, auf der Grundlage der ersten Übergangswahrscheinlichkeit zwischen jedem Paar von benachbarten Zuständen in der Markov-Kette,
wobei das erste Klassifizierungsmodul (403) ferner umfasst: eine zweite Klassifizierungseinheit, die konfiguriert ist zum Berechnen von Ähnlichkeiten zwischen einem ersten Klickereignis und Klickereignistypen und zum Bestimmen des Klickereignistyps mit der höchsten Ähnlichkeit als einen Ereignistyp, zu dem das erste Klickereignis gehört,
**dadurch gekennzeichnet, dass**
die zweite Klassifizierungseinheit ferner konfiguriert ist zum: Bestimmen eines repräsentativen Klickereignisses zu jedem der Klickereignistypen; und Berechnen von Ähnlichkeiten zwischen dem ersten Klickereignis und repräsentativen Klickereignissen der jeweiligen Klickereignistypen.

8. Vorrichtung nach Anspruch 7, wobei die Vorrichtung ferner umfasst:
ein zweites Erfassungsmodul, das konfiguriert ist zum Erfassen von Stichprobendaten des auf den Zielserver zugreifenden Benutzers;
ein zweites Bestimmungsmodul, das konfiguriert ist zum Bestimmen von vom Benutzer abgefragter zweiter Ressourcensequenzinformation anhand der Stichprobendaten;
ein zweites Klassifizierungsmodul, das konfiguriert ist zum Erfassen von in den zweiten Ressourcensequenzinformationen enthaltenen zweiten Klickereignissen und Klassifizieren jedes der zweiten Klickereignisse, um den Klickereignistyp zu erhalten, zu dem jedes der zweiten Klickereignisse gehört;
ein Wahrscheinlichkeitserfassungsmodul, das konfiguriert ist zum Erfassen von zweiten Übergangswahrscheinlichkeiten zwischen Klickereignistypen; und
ein Matrixkonstruktionsmodul, das konfiguriert ist zum Konstruieren der vortrainierten Markov-Übergangsmatrix auf der Grundlage der zweiten Übergangswahrscheinlichkeiten zwischen den Klickereignistypen.

9. Vorrichtung nach Anspruch 8, bei der das zweite Klickereignis eine oder mehrere URIs umfasst, und das zweite Klassifizierungsmodul ferner umfasst:
eine Umwandlungseinheit, die konfiguriert ist zum Umwandeln eines in jedem der zweiten Klickereignisse enthaltenen URI anhand einer voreingestellten Umwandlungsregel, um einen Umwandlungswert zu erhalten;
eine Berechnungseinheit, die konfiguriert ist zum Berechnen einer Ähnlichkeit zwischen jeweils zwei zweiten Klickereignissen auf der Grundlage von Umwandlungswerten; und
eine erste Klassifizierungseinheit, die konfiguriert ist zum Klassifizieren von zwei Klickereignissen, die der Ähnlichkeit entsprechen, in einen einzigen Klickereignistyp, wenn die Ähnlichkeit größer ist als ein voreingestellter Klassifizierungsschwellenwert, um einen Klickereignistyp zu bestimmen, zu dem jedes der zweiten Klickereignisse gehört.

10. Vorrichtung nach Anspruch 7, bei dem das Anomalieerfassungsmodul (405) ferner umfasst:
eine erste Bestimmungseinheit, die konfiguriert ist zum Bestimmen, dass der Zugriff auf den Zielserver anomal ist, wenn erste Übergangswahrscheinlichkeiten Zielübergangswahrscheinlichkeiten umfassen, die kleiner als ein voreingestellter Wahrscheinlichkeitsschwellenwert sind, und die Anzahl der Zielübergangswahrscheinlichkeiten größer als ein erster voreingestellter Schwellenwert ist;
eine Erfassungseinheit, die konfiguriert ist zum Multiplizieren von ersten, von Null verschiedenen Übergangswahrscheinlichkeiten in der Markov-Kette, um ein entsprechendes Produkt zu erhalten, und zum Ermitteln einer Wurzel vorgegebener Ordnung des Produkts; und
eine zweite Bestimmungseinheit, die konfiguriert ist zum Feststellen, dass der Zugriff auf den Zielserver anomal ist, wenn die Wurzel der vorgegebenen Ordnung kleiner als ein zweiter voreingestellter Schwellenwert ist.

11. Vorrichtung nach Anspruch 8, wobei die Vorrichtung ferner umfasst:
ein Vorverarbeitungsmodul, das zum Durchführen einer Vorverarbeitung der Zieldaten und der Stichprobendaten konfiguriert ist, wobei die Vorverarbeitung das Verarbeiten eines vorgegebenen Parameters, das Filtern einer vorgegebenen Rauschseite und das Erfassen eines Domänennamens des Zielservers umfasst.

12. Endgerät, umfassend: einen Prozessor, einen Speicher und ein Computerprogramm, das auf dem Speicher gespeichert ist und auf dem Prozessor ausführbar ist, **dadurch gekennzeichnet, dass** das Computerprogramm, wenn es vom Prozessor ausgeführt wird, Schritte des Verfahrens zur Erkennung von Datenanomalien gemäß einem der Ansprüche 1 bis 6 implementiert.

## Revendications

1. Procédé de détection d'anomalie de données, comprenant les étapes consistant à :
acquérir des données cibles d'un utilisateur accédant à un serveur cible ;
déterminer, selon les données cibles, des premières informations de séquence de ressources auxquelles l'utilisateur a accédé ;
acquérir des premiers événements de clic compris dans les premières informations de séquence de ressources, et classifier chacun des premiers événements de clic afin d'obtenir un type d'événement auquel appartient chacun des premiers événements de clic ;
déterminer, selon une chaîne de Markov construite par les types d'événement obtenus et une matrice de transition de Markov pré-entraînée, une première probabilité de transition entre chaque paire d'états adjacents dans la chaîne de Markov ; et
déterminer, sur la base de la première probabilité de transition entre chaque paire d'états adjacents de la chaîne de Markov, si un accès au serveur cible est anormal,
dans lequel la classification de chacun des premiers événements de clic pour obtenir un type d'événement auquel appartient chacun des premiers événements de clic comprend en outre les étapes consistant à : calculer des similitudes d'un premier événement de clic et de types d'événement de clic, respectivement, et déterminer le type d'événement de clic présentant la similitude la plus élevée en tant que type d'événement auquel appartient le premier événement de clic,
**caractérisé en ce que** :
le calcul des similitudes du premier événement de clic et des types d'événement de clic comprend en outre les étapes consistant à : déterminer un événement de clic représentatif dans chacun des types d'événement de clic ; calculer des similitudes du premier événement de clic et d'événements de clic représentatifs dans les types d'événement de clic respectifs, respectivement.

2. Procédé selon la revendication 1, dans lequel avant d'acquérir les données cibles de l'utilisateur accédant au serveur cible, le procédé comprend en outre les étapes consistant à :
acquérir des données d'échantillon de l'utilisateur accédant au serveur cible ;
déterminer, en fonction des données d'échantillon, des secondes informations de séquence de ressources auxquelles l'utilisateur a accédé ;
acquérir des seconds événements de clic compris dans les secondes informations de séquence de ressources, et classifier chacun des seconds événements de clic pour obtenir le type d'événement de clic auquel appartient chacun des seconds événements de clic ;
acquérir des secondes probabilités de transition entre des types d'événements de clic ; et
construire la matrice de transition de Markov pré-entraînée sur la base des secondes probabilités de transition entre les types d'événement de clic.

3. Procédé selon la revendication 2, dans lequel le second événement de clic comprend un ou plusieurs URI, et la classification de chacun des seconds événements de clic pour obtenir un type d'événement de clic auquel appartient chacun des seconds événements de clic comprend en outre les étapes consistant à :
convertir, selon une règle de conversion, un URI compris dans chacun des seconds événements de clic pour obtenir une valeur de conversion ;
calculer une similitude entre chaque paire d'événements de clic sur la base de valeurs de conversion ; et
classifier, si la similitude est supérieure à un seuil de classification prédéfini, deux événements de clic correspondant à la similitude en un type d'événement de clic, de manière à déterminer un type d'événement de clic auquel appartient chacun des seconds événements de clic.

4. Procédé selon la revendication 1, dans lequel la détermination que l'accès au serveur cible est anormal ou non sur la base de la première probabilité de transition entre chaque paire d'états adjacents dans la chaîne de Markov comprend en outre l'étape consistant à :
déterminer, si des premières probabilités de transition comprennent des probabilités de transition cibles qui sont inférieures à un seuil de probabilité prédéfini et si le nombre de probabilités de transition cibles est supérieur à un premier seuil prédéfini, que l'accès au serveur cible est anormal.

5. Procédé selon la revendication 1, dans lequel la détermination que l'accès au serveur cible est anormal ou non sur la base de la première probabilité de transition entre chaque paire d'états adjacents dans la chaîne de Markov comprend en outre l'étape consistant à :
multiplier des premières probabilités de transition qui ne sont pas nulles dans la chaîne de Markov pour obtenir un produit correspondant, et acquérir une racine d'un ordre prédéterminé du produit ; et
déterminer, si la racine de l'ordre prédéterminé est inférieure à un second seuil prédéfini, que l'accès au serveur cible est anormal.

6. Procédé selon la revendication 2, dans lequel le procédé comprend l'étape consistant à :
effectuer un pré-traitement sur les données cibles et les données d'échantillon, dans lequel le pré-traitement comprend un traitement d'un paramètre prédéterminé, un filtrage d'une page de bruit prédéterminée et une détection d'un nom de domaine du serveur cible.

7. Appareil de détection d'anomalie de données, comprenant :
un premier module d'acquisition (401) configuré pour acquérir des données cibles d'un utilisateur accédant à un serveur cible ;
un premier module de détermination (402) configuré pour déterminer, selon les données cibles, des premières informations de séquence de ressources auxquelles l'utilisateur a accédé ;
un premier module de classification (403) configuré pour acquérir des premiers événements de clic compris dans les premières informations de séquence de ressources et classifier chacun des premiers événements de clic pour obtenir un type d'événement auquel appartient chacun des premiers événements de clic ;
un module de détermination de probabilité (404) configuré pour déterminer, selon une chaîne de Markov construite par les types d'événements obtenu et une matrice de transition de Markov pré-entraînée, une première probabilité de transition entre chaque paire d'états adjacents dans la chaîne de Markov ; et
un module de détection d'anomalie (405) configuré pour déterminer, sur la base de la première probabilité de transition entre chaque paire d'états adjacents dans la chaîne de Markov, si l'accès au serveur cible est anormal ou non,
dans lequel le premier module de classification (403) comprend en outre : une seconde unité de classification configurée pour calculer des similitudes d'un premier événement de clic et de types d'événements de clic, respectivement, et déterminer le type d'événement de clic avec la similitude la plus élevée en tant que type d'événement auquel le premier événement de clic appartient, **caractérisé en ce que** :
la seconde unité de classification est en outre configurée pour : déterminer un événement de clic représentatif dans chacun des types d'événement de clic ; et calculer des similitudes entre le premier événement de clic et des événements de clic représentatifs dans les types d'événement de clic respectifs, respectivement.

8. Appareil selon la revendication 7, dans lequel l'appareil comprend en outre :
un second module d'acquisition configuré pour acquérir des données d'échantillon de l'utilisateur accédant au serveur cible ;
un second module de détermination configuré pour déterminer, selon les données d'échantillon, des secondes informations de séquence de ressources auxquelles l'utilisateur a accédé ;
un second module de classification configuré pour acquérir des seconds événements de clic compris dans les secondes informations de séquence de ressources et classifier chacun des seconds événements de clic pour obtenir le type d'événement de clic auquel appartient chacun des seconds événements de clic ;
un module d'acquisition de probabilité configuré pour acquérir des secondes probabilités de transition entre des types d'événement de clic ; et
un module de construction de matrice configuré pour construire la matrice de transition de Markov pré-entraînée sur la base des secondes probabilités de transition entre les types d'événements de clic.

9. Appareil selon la revendication 8, dans lequel le second événement de clic comprend un ou plusieurs URI, et le second module de classification comprend en outre :
une unité de conversion configurée pour convertir, selon une règle de conversion prédéfinie, un URI inclus dans chacun des seconds événements de clic pour obtenir une valeur de conversion ;
une unité de calcul configurée pour calculer une similitude entre chaque paire de second événements de clic sur la base de valeurs de conversion ; et
une première unité de classification configurée pour classifier, si la similitude est supérieure à un seuil de classification prédéfini, deux événements de clic correspondant à la similitude en un type d'événement de clic, de manière à déterminer un type d'événement de clic auquel appartient chacun des seconds événements de clic.

10. Appareil selon la revendication 7, dans lequel le module de détection d'anomalie (405) comprend en outre :
une première unité de détermination configurée pour déterminer, si des premières probabilités de transition comprennent des probabilités de transition cibles qui sont inférieures à un seuil de probabilité prédéfini et si le nombre de probabilités de transition cibles est supérieur à un premier seuil prédéfini, que l'accès au serveur cible est anormal ;
une unité d'acquisition configurée pour multiplier des premières probabilités de transition qui ne sont pas nulles dans la chaîne de Markov pour obtenir un produit correspondant et acquérir une racine d'un ordre prédéterminé du produit ; et
une seconde unité de détermination configurée pour déterminer, si la racine de l'ordre prédéterminé est inférieure à un second seuil prédéfini, que l'accès au serveur cible est anormal.

11. Appareil selon la revendication 8, dans lequel l'appareil comprend en outre :
un module de pré-traitement configuré pour effectuer un pré-traitement sur les données cibles et les données d'échantillon, dans lequel le pré-traitement comprend un traitement d'un paramètre prédéterminé, un filtrage d'une page de bruit prédéterminée et une détection d'un nom de domaine du serveur cible.

12. Dispositif terminal, comprenant : un processeur, une mémoire et un programme informatique qui est stocké sur la mémoire et capable de fonctionner sur le processeur, **caractérisé en ce que** : le programme informatique, lorsqu'il est exécuté par le processeur, met en œuvre des étapes du procédé de détection d'anomalie de données selon l'une quelconque des revendications 1 à 6.
